**Europäisches Patentamt**

**European Patent Office**

**Office européen des brevets**

(19)

(11) Veröffentlichungsnummer : **0 453 444 B1**

(12) # EUROPÄISCHE PATENTSCHRIFT

(45) Veröffentlichungstag der Patentschrift :
03.02.93 Patentblatt 93/05

(51) Int. Cl.$^5$ : **G01B 13/10**

(21) Anmeldenummer : 89913029.8

(22) Anmeldetag : 23.11.89

(86) Internationale Anmeldenummer :
PCT/DE89/00733

(87) Internationale Veröffentlichungsnummer :
WO 90/08299 26.07.90 Gazette 90/17

(54) **VERFAHREN ZUR MESSUNG DER STEUERQUERSCHNITTSFLÄCHE EINER DÜSE.**

(30) Priorität : 13.01.89 DE 3900836

(43) Veröffentlichungstag der Anmeldung :
30.10.91 Patentblatt 91/44

(45) Bekanntmachung des Hinweises auf die
Patenterteilung :
03.02.93 Patentblatt 93/05

(84) Benannte Vertragsstaaten :
DE ES FR GB IT SE

(56) Entgegenhaltungen :
DE-A- 1 953 316
DE-A- 2 700 439
US-A- 3 543 407
US-A- 4 574 617
MEASUREMENT TECHNIQUES, vol. 28, Nr. 11,
November 1985, Plenum Publishing Corp.
(New York, US), I. Sh. Kogan et al. :
"ExactDiameter Measurement On Capillary
Holes", pages 916-919

(73) Patentinhaber : **ROBERT BOSCH GMBH**
**Postfach 30 02 20**
**W-7000 Stuttgart 30 (DE)**

(72) Erfinder : **ABT, Jürgen**
**Leimengrubenstrasse 18**
**W-7016 Gerlingen (DE)**
Erfinder : **STUMPF, Sybille**
**Goethestr. 3**
**W-7145 Markgroeningen 2 (DE)**
Erfinder : **KUHN, Ulrich**
**Birkenweg 5**
**W-7251 Renningen-Malmsheim (DE)**
Erfinder : **BANZHAF, Werner**
**Kaethe-Kollwitz-Weg 3**
**W-7032 Sindelfingen (DE)**
Erfinder : **FELTEN, Gerhard**
**Balinger Strasse 25**
**W-7250 Leonberg (DE)**
Erfinder : **LEMPERLE, Gerold**
**Rhoneweg 27**
**W-7022 Leinfelden (DE)**
Erfinder : **SPECKER, Michael**
**Enderstrasse 7**
**W-8976 Blaichach (DE)**

EP 0 453 444 B1

**Beschreibung**

Stand der Technik

Die Erfindung geht aus von einem Verfahren zur Messung der Steuerquerschnittsfläche einer Düse nach der Gattung des Hauptanspruchs wie z.B aus DE-A-1 953 316 bekannt. Für derartige Messungen wurde bisher das sogenannte Rota-Verfahren angewandt, bei dem die Düse mit einem überkritischen Verhältnis $P_A/P_E = 0,52$ (für Luft) durchströmt wird. Hierbei wird ein Schwebekörper-Durchflußmesser vor- bzw. hinter dem Prüfling angeordnet, je nachdem $P_E$ oder $P_A$ gleich dem atmosphärischen Luftdruck ist (Unterdruck- bzw. Überdruckverfahren). Ein derartiges Verfahren hat den Nachteil, daß es relativ zeitaufwendig und nicht besonders genau ist, für jeden Düsentyp eine größere Anzahl von Lehren benötigt und schlecht automatisierbar ist. Bekannt ist weiterhin, den Massenstrom zu messen, z. B. mittels eines kalorischen Durchflußmessers. Hierbei müssen zusätzlich der Druck und die Temperatur des einströmenden Mediums (also auf dar Hochdruckseite des Prüflings) gemessen bzw. entsprechend konstant gehalten werden. Auch ein derartiges Meßverfahren ist verhältnismäßig umständlich und langsam.

Vorteile der Erfindung

Das erfindungsgemäße Verfahren mit den kannzeichnenden Merkmalen des Hauptanspruchs hat demgegenüber den Vorteil, daß es sehr kurze Meßzeiten ermöglicht und keine Druckmessung benötigt. Dieses Verfahren nutzt die physikalischen Vorteile der überkritischen Durchströmung und reduziert dadurch Fehlereinflüsse. Die zur Ermittlung der gesuchten Steuerquerschnittsfläche benötigte Anzahl von Meßgrößen ist auf nur noch eine wesentliche, nämlich die des Volumenstromes reduziert; die Temperatur wird nur für ein Korrekturglied benötigt. Das Verfahren ergibt darüber hinaus eine lineare Kennlinie, ermöglicht einen großen Meßbereich und ist auch leicht überprüfbar.

Beschreibung des erfindungsgemäßen Verfahrens

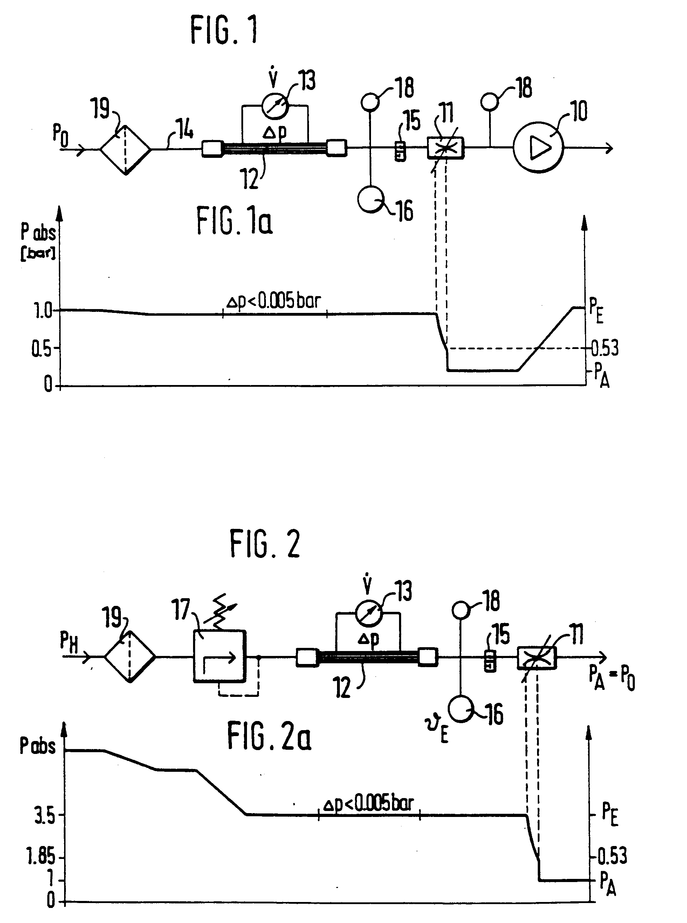

Das erfindungsgemäße Verfahren ist anhand zweier Figuren 1 und 2 dargelegt, welche in vereinfachter Weise die Meßeinrichtung wiedergeben.

Bei der Meßeinrichtung nach Figur 1, in welcher die Unterdruckmethode verwendet wird, ist mit 10 eine Vakuumpumpe bezeichnet, mit 11 der Prüfling (Düse) und mit 12 eine Laminarstrecke mit Differenzdruckaufnehmer 13, welche zur Volumenstrommessung dient. Die Laminarstrecke 12 besteht zweckmäßigerweise aus mehreren parallelgeschalteten Rohren, die mit der an die Vakuumpumpe angeschlossenen Leitung 14 verbunden sind. An der Eingangsseite der Laminarstrecke herrscht der atmosphärische Luftdruck $P_O$, vermindert um den Druckabfall im Filter 19, vor dem Prüfling der Druck $P_E$, hinter dem Prüfling der Druck $P_A$. Wie aus Figur 1a ersichtlich ist, bei welcher auf der Ordinate der absolute Druck $P_{ABS}$ in bar aufgetragen ist, erkennt man, daß der Differenzdruck an der Laminarstrecke sehr klein ist, z. B. 0,005 bar.

Bei der Meßeinrichtung nach Figur 2 handelt es sich um die Überdruckmethode. Sie unterscheidet sich gegenüber der obigen dadurch, daß in der Leitung 14 vor der Laminarstrecke 12 und vor einem dieser vorgtschalteten Druckregler 17 ein Druck $p_H$ herrscht. Hinter dem Prüfling 11 ist der Druck $P_A = P_O$ (atmosphärischer Luftdruck).

Vor dem Prüfling können ein Ventil 15 sowie ein Temperaturmeßgerät 16 ageordnet sein. Vor und hinter dem Prüfling können zwei oder ein Manometer 18 gemäß Figur 1 und 2 angeordnet sein, die dazu dienen, die Betriebsdrücke $P_A$ und $P_E$ (mittels einer Vakuumpumpe 10 bzw. eines Druckreglers 17) so einzustellen, daß die Mindestbedingung für das überkritische Druckverhältnis sicher eingehalten wird.

Aus obiger Meßeinrichtung ist zu erkennen, daß die Meßgröße der Volumenstrom auf der Eingangsseite (Hochdruckseite) des Prüflings ist. Wie unten gezeigt wird, ist keine Druckmessung, die über die Absicherung des überkritischen Druckverhältnisses hinausgeht, erforderlich. Wie weiter gezeigt wird, können Fehler des Prüfwertes aufgrund von Abweichungen der Temperatur des Prüfmediums von einem festgelegten Sollwert mit Hilfe eines Korrekturfaktors eliminiert werden. Auch eine Temperaturkorrektur wird erst erforderlich, wenn Temperaturabweichungen von über 10 K vom festgelegten Sollwert (z. B. 20 °C) auftreten.

Für den Massenstrom $\dot{M}$ bei überkritischer Durchströmung des Prüflings gilt:

$$\dot{M} = \text{Konst}_G \cdot P_E \frac{1}{\sqrt{T_E}} A$$

Es bedeuten:
$\text{Konst}_G$ = Stoffgröße dar verwendeten Gasart (Luft)

A        = Querschnittsfläche der Düse
$P_E$        = Eingangsdruck
$T_E$        = Temperatur (abs.) an Eingangsseite vom Prüfling

Der Massenstrom ist also proportional nur zum Eingangsdruck und nicht - wie bei unterkritischer Strömung - zur Wurzel aus der Druckdifferenz $P_E$ - $P_A$. Der Massenstrom ist jedoch aus verschiedenen Gründen nicht die optimale Meßgröße.

Aus obiger Gleichung folgt unter Beachtung des Zusammenhangs von Druck, Dichte und Temperatur des Prüfmediums (ideales Gasgesetz)

$$\rho_E = \rho_O \frac{T_O \, P_E}{P_O \, T_E}$$

wobei

$\rho_E, P_E, T_E$:        Dichte, Druck, (absolute Temperatur) des Prüfmediums im veränderlichen Betriebszustand E (auf Hochdruckseite des Prüflings) und

$\rho_O, P_O, T_O$:        Dichte, Druck, (absolute) Temperature des Prüfmediums bei Standardbedingung, also festgelegte, konstante Größen bedeuten.

die Beziehung für den Volumenstrom in Betriebszustand 1 (auf der Hochdruckseite) bei überkritischer Strömung.

$$\dot{V}_E = \dot{M}/\rho_E = K \cdot \sqrt{T_E} \cdot A$$

Diese Beziehung besagt, daß bei überkritischer Strömung der auf der Hochdruckseite das Prüflings gemessene Volumenstrom nicht mehr vom Druck, also weder vom Eingangs- noch vom Ausgangsdruck abhängt. Dieser Volumenstrom ist somit die zweckmäßigste Meßgröße zur Ermittlung der Steuerquerschnittsfläche A.

Als Einfluß der Betriebsparameter verbleibt eine relativ schwache Temperaturabhängigkeit (über die Wurzel der absoluten Temperatur), so daß z. B. eine Temperaturabweichung des Prüfmediums Luft um 10K vom festgelegten Sollwert (z. B. 20 °C) zu einem Fehler im Durchfluß und damit in der Querschnittsfläche A von nur 1,7 % führt. Mit Hilfe eines (zusätzlichen) Temperaturfühlers 16, der die Temperatur im Betriebszustand E (vor dem Prüfling) erfaßt, kann dieser Fehlereinfluß eliminiert werden.

Für die gesuchte Steuerquerschnittsfläche A gilt somit die Beziehung (nach Umformung der obigen Gleichung):

$$A = K' \cdot \dot{V}_E \, (1 - 0{,}0017 \, (\theta_E - 20 \, °C)) \quad (I)$$

wobei

K′ für ein festgelegtes Prüfmedium (Luft) eine konstante Größe ist und

$\theta_E$ die Temperatur (in ° Celsius) des Prüfmediums vor dem Prüfling bedeutet.

Die Messung des Volumenstromes $\dot{V}_E$ erfolgt nach dem Hagen-Poiseuilleschen Gesetz:

$$\dot{V}_E = K_L \cdot \frac{1}{\eta} \cdot \Delta p$$

Dabei bedeuten:

$K_L$:        Kalibrierfaktor der laminar durchströmten Meßstrecke 12 ($\triangleq$ Widerstandsstrecke)
$\eta$:        Dynamische Viskosität des Prüfmediums
$\Delta_P$:        An Meßstrecke 12 abgegriffener Differenzdruck.

Der Differenzdruck $\Delta p$ wird mit einem Differenzdruckaufnehmer 13 mit kurzer Ansprechzeit gemessen; solche Geräte sind am Markt erhältlich.

Bei der vorgeschlagenen Methode zur Volumenstrommessung macht man sich den besonderen Umstand zunutze, daß bei Gasen (beim Prüfmedium) die dynamische Viskosität vom Druck, im vorliagendenFall speziell vom Betriebsdruck $P_E$, unabhängig ist. Es verbleibt jedoch auch hier eine gewisse Abhängigkeit von der Tamperatur; für Luft als Prüfmedium gilt näherungsweise:

$$\dot{V}_E = K'_L \cdot \Delta p \cdot (1 - 0{,}0025 \, (\theta_E - 20 \, °C)) \quad (II)$$

Hier bedeuten:

$K'_L$:        Kalibrierfaktor der Meßstrecke 12 für Luft bei 20 °C.

$\theta_E$:        die oben definierte Temperatur

Die Zusammenfassung der beiden Gleichungen I und II liefert schließlich für die gesuchte Querschnitts-fläche

$$A = K'' \cdot \Delta p \cdot (1 - 0{,}0042 \, (\theta_E - 20 \, °C)) \quad (III)$$

Der konstante Faktor $K'' = K'_L \cdot K'$ enthält die Stoffgrößen des Prüfmediums und die Geometriefaktoren der laminaren Meßstrecke.

Der Ausdruck in der Klammer stellt den Tamperaturkorrekturfaktor $K_T$ dar. Ist die Temperatur des Prüfmediums gerade gleich der Solltemperatur (20 °C), dann ist der Korrekturfaktor $K_T = 1$, und zwischen gesuchter Querschnittsfläche A und gemessenem Differenzdruck a der laminaren Meßstrecke $\Delta p$ besteht ein ganz ein-

3

facher linearer Zusammenhang.

Hinweis: Sollte die Temperatur des Prüfmediums am Eingang des Prüflings $\theta_E$ mit der Temperatur des Prüfmediums an der laminaren Meßstrecke $\theta_L$ nicht übereinstimmen (z. B. bei größerem räumlichen Abstand), so ist ein zweiter Temperaturfühler (für $\theta_L$) erforderlich und eine modifizierte Temperaturkorrektur durchzuführen

$$K_T = (1 + 0,0017 (\theta_E - 20\,°C) - 0,0059 (\theta_L - 20\,°C))$$

Die für die Ermittlung der Prüfgröße A benötigten Meßgrößen $\Delta p$ und $\theta_E$, ($\theta_L$) können in einem rechnergesteuerten Prüfgerät, das die in den Figuren 1 und 2 dargestellten Komponenten enthält, selbst aber nicht gezeichnet ist, erfaßt und gemäß Gleichung III verarbeitet werden.

## Patentansprüche

1.  Verfahren zur Messung der Steuerquerschnittsfläche (A) einer Düse (11) mittels eines pneumatischen Durchflußverfahrens mit überkritischem Druckverhältnis, dadurch gekennzeichnet, daß der durch die Düse (11) hindurchtretende Durchfluß als Volumenstrom ($\dot{V}_E$) auf deren Eingangsseite gemessen wird und daß für die Steuerquerschnittsfläche folgende Beziehung verwendet wird:

    $$A = K' \cdot \dot{V}_E (1 - 0,0017 (\theta_E - 20\,°C)) \quad (I)$$

    wobei

    $K'$ für ein festgelegtes Prüfmedium (Luft) eine konstante Größe ist und

    $\theta_E$ die Temperatur (in ° Celsius) des Prüfmediums vor dem Prüfling bedeutet.

2.  Verfahren nach Anspruch 1, dadurch gekennzeichnet, daß der Volumenstrom ($\dot{V}$) durch eine Differenzdruckmessung an einer laminar durchströmten Widerstandsstrecke (12) erfaßt wird.

3.  Verfahren nach Anspruch 2, dadurch gekennzeichnet, daß die Widerstandsstrecke (12) aus einem oder mehreren parallelgeschalteten Rohren besteht.

4.  Verfahren nach einem der Ansprüche 1 bis 3, dadurch gekennzeichnet, daß für dieses die Unterdruckmethode mittels einer Vakuumpumpe (10) durchgeführt wird.

5.  Verfahren nach einem der Ansprüche 1 bis 3, dadurch gekennzeichnet, daß für dieses die Überdruckmethode angewendet wird.

6.  Verfahren nach Anspruch 1 bis 5, dadurch gekennzeichnet, daß Abweichungen der Temperatur des Prüfmediums ($\theta_E$) von einer Solltemperatur mit Hilfe eines Temperaturfühlers (16) erfaßt und in einem Korrekturfaktor berücksichtigt werden.

7.  Verfahren nach Anspruch 1 bis 6, dadurch gekennzeichnet, daß die Meßgrößen Differenzdruck, Temperatur und eventuell weitere Hilfsgrößen in einem rechnergesteuerten Prüfgerät erfaßt und verarbeitet werden.

## Claims

1.  Method of measuring the control cross-sectional area (A) of a nozzle (11) by means of a pneumatic flow method employing supercritical pressure ratio, characterised in that the flow passing through the nozzle (11) is measured as a volumetric flow ($V_E$) on its input side, and in that the following relationship is used for the control cross-sectional area:

    $$A = K' \cdot V_E (1 - 0,0017 (\theta_E - 20°C)) \quad (I)$$

    where

    $K'$ is a constant quantity for a fixed test medium (air) and

    $\theta_E$ is the temperature (in ° Celsius) of the test medium upstream of the component under test.

2.  Method according to Claim 1, characterised in that the volumetric flow (V) is measured by means of a differential pressure measurement across a resistance section (12) with laminar flow.

3.  Method according to Claim 2, characterised in that the resistance section (12) comprises one or more parallel-connected tubes.

4. Method according to one of Claims 1 to 3, characterised in that, for said method, the underpressure method is carried out by means of a vacuum pump (10).

5. Method according to one of Claims 1 to 3, characterised in that, for said method, the overpressure method is used.

6. Method according to Claim [sic] 1 to 5, characterised in that deviations in the temperature of the test medium ($\theta_E$) from a setpoint temperature are measured with the aid of a temperature sensor (16) and are allowed for in a correction factor.

7. Method according to Claim [sic] 1 to 6, characterised in that the measured variables of differential pressure, temperature and any further auxiliary variables are measured and processed in a computer-controlled test instrument.

## Revendications

1. Procédé pour la mesure de la superficie de régulation (A) d'un ajutage (11) au moyen d'un procédé de mesure de débit pneumatique sous un rapport de pression surcritique, procédé caractérisé en ce que l'écoulement passant à travers l'ajutage (11) est mesuré comme un flux volumétrique ($V_E$) du côté de son entrée et en ce que pour la superficie de régulation on a la relation suivante :
$$A = K' \cdot \dot{V}_E \left(1 - 0{,}0017 \left(\varphi_E - 20°C\right)\right) \quad (I)$$
dans laquelle :
K' est une grandeur constante pour un fluide d'examen (air) déterminé et
$\varphi_E$ est la température (en degrés celsius) du fluide d'examen en avant de l'échantillon.

2. Procédé selon la revendication 1, caractérisé en ce que le flux volumétrique (V) est détecté par une mesure de pression différentielle sur un trajet d'écoulement laminaire résistant (12).

3. Procédé selon la revendication 2, caractérisé en ce que le trajet résistant (12) consiste en un ou plusieurs tubes montés en parallèle.

4. Procédé selon l'une des revendications 1 à 3, caractérisé en ce que pour celui-ci on se sert de la méthode à dépression au moyen d'une pompe à vide (10).

5. Procédé selon l'une des revendications 1 à 3, caractérisé en ce que pour celui-ci on utilise la méthode à surpression.

6. Procédé selon l'une des revendications 1 à 5, caractérisé en ce que l'on détecte des écarts de température du fluide d'examen ($f_E$) à partir d'une température de consigne à l'aide d'un détecteur de température (16) et qu'on les prend en considération par un facteur de correction.

7. Procédé selon les revendications 1 à 6, caractérisé en ce que les grandeurs de mesure, la pression différentielle, la température et éventuellement d'autres grandeurs auxiliaires sont détectées dans un appareil d'examen commandé par ordinateur et sont retraitées.

# FIG. 1

# FIG. 1a

$\Delta p < 0.005\,bar$

# FIG. 2

# FIG. 2a

$\Delta p < 0.005\,bar$